(19)

**Europäisches Patentamt**
**European Patent Office**
**Office européen des brevets**

(11) **EP 4 418 175 A1**

(12) **EUROPEAN PATENT APPLICATION**
published in accordance with Art. 153(4) EPC

(43) Date of publication:
**21.08.2024 Bulletin 2024/34**

(21) Application number: **22880650.1**

(22) Date of filing: **26.08.2022**

(51) International Patent Classification (IPC):
*G06Q 10/06* (2023.01)     *B65G 61/00* (2006.01)
*G06N 99/00* (2019.01)     *G06Q 10/04* (2023.01)

(52) Cooperative Patent Classification (CPC):
**B65G 61/00; G06N 99/00; G06Q 10/04;**
**G06Q 10/06**

(86) International application number:
**PCT/JP2022/032263**

(87) International publication number:
**WO 2023/062953 (20.04.2023 Gazette 2023/16)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **14.10.2021 JP 2021168551**

(71) Applicant: **Hitachi, Ltd.**
**Tokyo 100-8280 (JP)**

(72) Inventors:
• **TERAMOTO, Yaemi**
**Tokyo 100-8280 (JP)**
• **MATSUBA, Hiroya**
**Tokyo 100-8280 (JP)**

(74) Representative: **MERH-IP Matias Erny Reichl**
**Hoffmann**
**Patentanwälte PartG mbB**
**Paul-Heyse-Strasse 29**
**80336 München (DE)**

(54) **COOPERATION MANAGEMENT SYSTEM AND COOPERATION MANAGEMENT METHOD**

(57)     A cooperative management system for causing a plurality of individual systems to operate in cooperation with each other as one overall system has a search unit that searches for and decides conditions of individual indicators or operating parameters which will improve an overall indicator, by using a relational model. The relational model represents a relationship between an overall indicator which is an evaluation indicator regarding the overall system, and the individual indicators which are evaluation indicators of the respective individual systems, or the operating parameters of the respective individual systems for controlling the individual indicators. Also, the cooperative management system has a notification unit that notifies the respective individual systems of the conditions of the individual indicators or the operating parameters which are decided by the search unit.

FIG. 2

**Description**

TECHNICAL FIELD

The present invention relates to a cooperative management system and a cooperative management method.

BACKGROUND ART

There is a system in which a plurality of individual systems cooperate with each other and operate as one system. Such a system is called a System of Systems and it has an indicator to be achieved as the entire cooperative system (hereinafter referred to as an "overall system"), while the individual systems have their indicators to be achieved respectively independently.

One example of the overall system is a supply chain management system. Regarding the supply chain management, for example, PTL 1 discloses an information processing apparatus that generates behavior rules for a plurality of companies constituting the supply chain in order to optimize an important achievement evaluation indicator for the entire supply chain. Specifically, PTL 1 discloses that "a behavior rule pattern generation rule generates a plurality of patterns of behavior rule information which associates first companies, which constitute a supply chain, with behavior logics according to a status of second companies which constitute the supply chain of the first companies; a simulation unit calculates an important achievement evaluation indicator for the entire supply chain with respect to each of the plurality of patterns of the behavior rule information; and an optimum behavior rule selection unit selects the behavior rule information to be applied to the supply chain based on the important achievement evaluation indicator.

CITATION LIST

PATENT LITERATURE

PTL 1: Japanese Patent Application Laid-Open (Kokai) Publication No. 2016-207017

SUMMARY OF THE INVENTION

PROBLEMS TO BE SOLVED BY THE INVENTION

However, with the above-described conventional technology, a pattern which makes the best important achievement evaluation indicator of the entire supply chain is selected from among a plurality of candidate patterns for the behavior rules which are generated in advance based on candidates for the behavior rules for each company, which are input by a user; and if there are other behavior rules which make the important achievement evaluation indicator of the entire supply chain much better, there is no description regarding selection of such other behavior rules. Also, the patterns of the behavior rules for each company, which are selected here, are selected from the limited candidates based on the user's input, but such selected patterns are not necessarily those which would optimize the important achievement evaluation indicator of the entire supply chain.

Furthermore, as the number of companies which constitute the supply chain becomes larger, a problem occurs such that the calculation to select the pattern of the behavior rules which optimizes the important achievement evaluation indicator becomes complicated and enormous.

The present invention was devised in consideration of the above-described circumstance and it is an object of the invention, regarding the overall system in which a plurality of individual systems cooperate with each other, to easily and appropriately decide goals or operations of the individual systems which are low-order systems so as to optimize a goal of the overall system which is a upper system.

MEANS TO SOLVE THE PROBLEMS

In order to solve the above-described problem, there is provided according to one aspect of the present invention a cooperative management system for causing a plurality of individual systems to operate in cooperation with each other as one overall system, wherein the cooperative management system includes: a search unit that, by using a relational model between an overall indicator which is an evaluation indicator regarding the overall system, and individual indicators which are evaluation indicators regarding respective individual systems or operating parameters of the respective individual systems for controlling the individual indicators, searches for and decides conditions of the individual indicators or the operating parameters which will improve the overall indicator; and a notification unit that notifies the respective individual systems of the conditions of the individual indicators or the operating parameters which are decided by the search unit.

ADVANTAGEOUS EFFECTS OF THE INVENTION

According to one aspect of the present invention, the goals or the operations of the individual systems which are the low-order systems can be decided easily and appropriately so as to optimize the goal of the overall system which is the upper system, in the overall system in which the plurality of individual systems cooperate each other.

BRIEF DESCRIPTION OF DRAWINGS

Fig. 1 is a diagram for explaining the outlines of an embodiment;
Fig. 2 is a diagram illustrating the configuration of a multi-systems integration operation system according to an embodiment;
Fig. 3 is a functional block diagram illustrating the configuration of the multi-systems integration operation system according to the embodiment;
Fig. 4 is a flowchart illustrating relational model creation processing according to the embodiment;
Fig. 5 is a flowchart illustrating individual-KPI / operating-parameter selection processing;
Fig. 6 is a flowchart illustrating KPI / operating-parameter relational model generation processing;
Fig. 7 is a flowchart illustrating individual-KPI /operating-parameter deciding processing according to the embodiment;
Fig. 8 is a flowchart illustrating search problem setting processing;
Fig. 9 is a flowchart illustrating individual-KPI / operating-parameter search processing;
Fig. 10 is a flowchart illustrating individual-KPI / operating-parameter notification processing;
Fig. 11 is a diagram illustrating a display screen of a terminal apparatus connected to the cooperative management system;
Fig. 12 is a diagram illustrating an example of application of the multi-systems integration operation system according to the embodiment to a supply chain planning & operation system;
Fig. 13 is a diagram illustrating an example of application of the multi-systems integration operation system according to the embodiment to a power grid maintenance management system;
Fig. 14 is a diagram illustrating another example of application of the multi-systems integration operation system according to the embodiment to the power grid maintenance management system.

DESCRIPTION OF EMBODIMENTS

An embodiment of the present invention will be described below with reference to the drawings. Incidentally, the embodiment described below is merely illustrative including the diagrams and does not limit the invention within the scope of the claims. Moreover, all miscellaneous elements and their combinations described in the embodiment are not necessarily indispensable to the solution of the invention. Furthermore, illustrations of diagrams and explanations may be omitted regarding those which are indispensable to the configuration of the invention, but are well known.
In the following description, the processing will be sometimes explained by referring to a "program" as a subject. Since the program performs defined processing by using a storage unit and/or interfaces, etc., as necessary when executed by a processor, the processor (or a device such as a controller which has that processor) may be mentioned as the subject of the processing. In other words, an "XXX unit" may be mentioned as the subject of the processing of an "XXX program."
The programs may be installed in an apparatus such as a computer or may be in, for example, a program distribution server or a computer-readable (for example, non-transitory) recording medium. Also, in the following description, two or more programs may be implemented as one program or one program may be implemented as two or more programs.
Furthermore, there may be one "processor" or a plurality of "processors." The processor(s) is typically a microprocessor like a CPU (Central Processing Unit), but may be other kinds of processors like a GPU (Graphics Processing Unit). Moreover, the processor may be a single core processor or a multi-core processor. Furthermore, the processor may be a processor(s) in a broad sense such as a hardware circuit which performs part or whole of the processing (for example, FPGA (Field-Programmable Gate Array) or ASIC (Application Specific Integrated Circuit)).
Moreover, in the following description, identification numbers will be used as identification information of various objects; however, identification information other than the identification numbers (for example, identifiers including English characters and signs) may be adopted. In the following description, "#Y" indicates the number Y and, for example, "XXX#Y" represents XXX which is identified with the number Y.

Furthermore, in the following description, when describing elements of the same type without distinguishing between them, a reference numeral (or a common reference numeral in their reference numerals) is used; and when distinguishing between the elements of the same type, identification numbers of the elements (or the reference numerals) may be used. Also, the number of the respective elements indicated in each drawing is an example and is not limited to what is indicated in the drawing.

Moreover, the expression "A/B" means "one or both of A and B."

(Outlines of Embodiment)

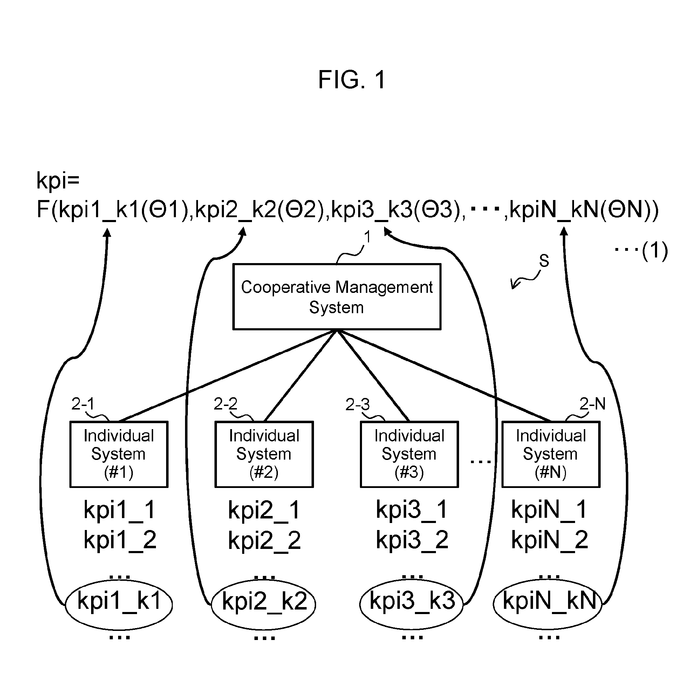

Fig. 1 is a diagram for explaining the outlines of an embodiment. A multi-systems integration operation system S according to this embodiment has a cooperative management system 1 and a plurality of individual systems 2 (an individual system #1 (an individual system 2-1), an individual system #2 (an individual system 2-2), and so on to an individual system #N (an individual system 2-N)). Regarding the plurality of individual systems 2, their cooperation to share partial information is managed by the cooperative management system 1 connected via a communication line.

The multi-systems integration operation system S has an indicator defined to indicate a goal to be achieved. Also, each of the individual systems 2 has an indicator defined to indicate its goal to be achieved. In this embodiment, the indicator indicating the goal is a KPI(s) (Key Performance Indicator(s)). In the following description, the KPIs include constraint conditions such as resource limitations, deadlines, etc., in addition to general KPIs such as sales, profits, quality, and cost.

A total KPI (kpi) to be achieved by the multi-systems integration operation system S and an individual KPI (kpin_k) to be achieved by each individual system #n have a correlation expressed by a function as indicated in the following Expression (1), where kpi represents an objective variable and kpin_k represents an explanatory variable. Here, n=1, 2,...N and k=1, 2,... represent indexes for identifying kpi#k of the individual system #n.

$$kpi = F(kpi1\_k1(\Theta1), kpi2\_k2(\Theta2), kpi3\_k3(\Theta3), ..., kpiN\_kN(\Theta N)) \quad ...... \quad (1)$$

However, kpin_k is a function of On.

Also, On is an operating parameter of the individual system #n.

The function F of Expression (1) can apply a relational model generated by learning data of, for example, kpi and kpin_k.

Here, there are pluralities of individual KPIs (kpin_k) and operating parameters On for the individual system #n, but they are limited to only those which are of top ranks and have strong influence on the total KPI (kpi) of the multi-systems integration operation system S. When each individual KPI which has the strong influence on the total KPI, among the individuals KPIs of the individual system #n (n=1 to N), is kpin_kn (n=1, 2, 3, ...) as illustrated in Fig. 1, Expression (1) is generated based on kpin_kn.

Then, the cooperative management system 1 decides the individual KPI (kpin_kn) / operating parameter On of each individual system #n which optimizes the total KPI (kpi), by solving a search problem with Expression (1) as an objective function or an evaluation function based on the latest status of the current multi-systems integration operation system S under specified constraint conditions. The cooperative management system 1 notifies each individual system #n of the decided individual KPI (kpin_kn) / operating parameter On.

The individual system #n sets the individual KPI (kpin_kn) / operating parameter On, which has been reported by the cooperative management system 1, to its local system and operates autonomously within the condition of the individual KPI (kpin_kn) / operating parameter On in accordance with its individual purpose.

Accordingly, the cooperative management system 1 decides the individual KPIs / operating parameters to optimize the total KPI and notifies the individual systems #n of the decided individual KPIs / operating parameters. The individual systems #n operate autonomously so as to achieve the reported individual KPIs or operate in accordance with the reported operating parameters, thereby making it possible to optimize the total KPI and achieve the goals of the respective individual systems #n.

(Configuration of Multi-systems Integration Operation System S)

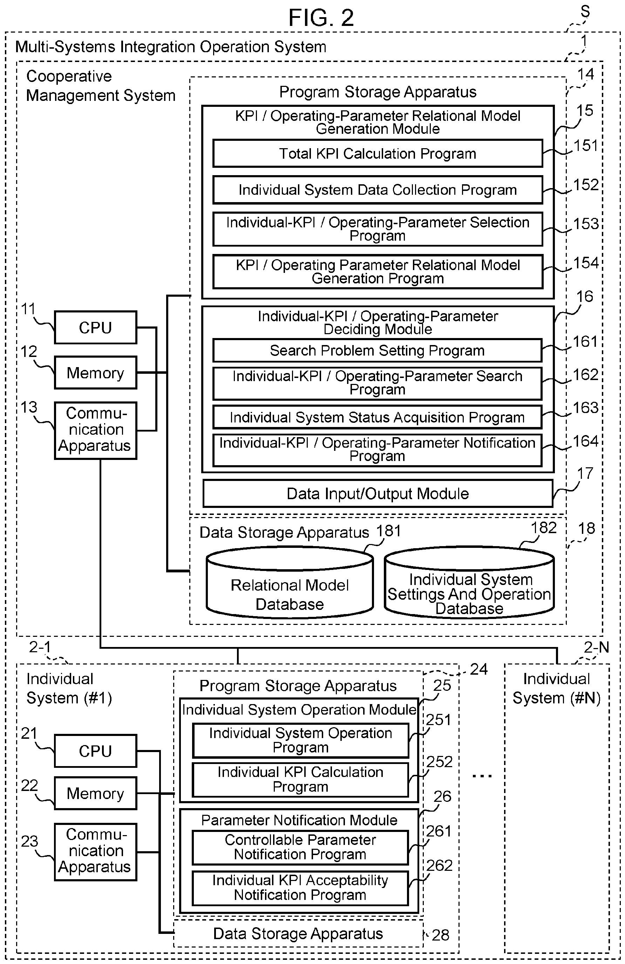

Next, by referring to Fig. 2, the configuration of the multi-systems integration operation system S will be described.

Fig. 2 is a diagram illustrating the configuration of the multi-systems integration operation system S according to an embodiment. The multi-systems integration operation system S has the cooperative management system 1 and the plurality of individual systems 2-1, and so on to 2-N. The cooperative management system 1 and the plurality of the individual systems 2 are connected via a communication line.

The cooperative management system 1 has a CPU 11, a memory 12, a communication apparatus 13, a program storage apparatus 14, and a data storage apparatus 18. The CPU 11 reads programs described later from the program storage apparatus 14 and executes each processing in cooperation with the memory 12 and the communication apparatus 13. The communication apparatus 13 is an interface for the cooperative management system 1 to transmit/receive data to/from the individual system 2.

The data storage apparatus 18 includes a relational model database 181 and an individual system settings and operation database 182. The individual system settings and operation database 182 stores setting information and actual operation data of each individual system 2 collected from each individual system 2.

The program storage apparatus 14 stores a KPI relational model generation module 15, an individual system operating parameter deciding module 16, and a data input/output module 17.

The KPI relational model generation module 15 includes a total KPI calculation program 151, an individual system data collection program 152, an individual-KPI / operating-parameter selection program 153, and a KPI / operating-parameter relational model generation program 154.

The total KPI calculation program 151 calculates the total KPI according to the aforementioned Expression (1). The individual system data collection program 152 regularly collects various kinds of data about each individual system 2 from each individual system 2. The various kinds of data about each individual system 2 include data used in each processing of the cooperative management system 1 of this embodiment.

The individual-KPI / operating-parameter selection program 153 selects an operating parameter capable of controlling the individual KPI of each individual system 2. The individual-KPI / operating-parameter selection program 153 may select an operating parameter capable of controlling the individual KPI of each individual system 2 by receiving input and notification from, for example, external sources (such as the respective individual systems 2). Furthermore, the individual-KPI / operating-parameter selection program 153 may select an operating parameter capable of controlling the individual KPI of each individual system 2 from the setting information of the individual system 2 retained in the cooperative management system 1.

Furthermore, the individual-KPI / operating-parameter selection program 153 selects an individual KPI(s) / operating parameter(s) which has strong influence on the total KPI, from among the individual KPIs / operating parameters for each individual system 2. For example, the individual-KPI / operating-parameter selection program 153 may select one individual KPI / operating parameter having a maximum correlation coefficient with the total KPI for each individual system 2 or a plurality of individual KPIs / operating parameters having a correlation coefficient equal to or more than a certain value for each individual system 2.

The operating parameter(s) capable of controlling the individual KPI(s) of each individual system 2 selected by the individual-KPI / operating-parameter selection program 153 and the individual KPI(s) / operating parameter(s) having strong influence on the total KPI are called "target individual KPI(s) / operating parameter(s)."

The KPI / operating-parameter relational model generation program 154 learns the relationship of respective pieces of data between the total KPI and the individual KPIs / operating parameters of the respective individual systems 2, which are collected by the individual system data collection program 152, and generates a relational model. The KPI / operating-parameter relational model generation program 154 stores the generated relational model in the relational model database 181.

The individual system operating parameter deciding module 16 stores a search problem setting program 161, an individual-KPI / operating-parameter search program 162, an individual system status acquisition program 163, and an individual-KPI / operating-parameter notification program 164.

The search problem setting program 161 reads a relational model from the relational model database 181 and sets a search problem for searching for and deciding the individual KPIs / operating parameters for the respective individual systems 2 that will optimize the total KPI. The search problem is set as a problem that searches for the individual KPI (kpin_k) condition/operating parameter $\Theta n$ for each individual system 2, which will set an objective function / evaluation function as a total KPI (kpi) of the above Expression (1) and optimize the objective function / evaluation function. The individual KPI conditions include the value, upper limit, lower limit, and range of the individual KPIs.

The individual-KPI / operating-parameter search program 162 searches for and decides the individual KPI condition / operating parameter for each individual system 2 that will optimize the solution of the search problem set by the search problem setting program 161, that is, the total KPI under the constraint condition(s).

The individual system status acquisition program 163 obtains the latest system status from each individual system 2. The latest system status includes information that can be an input value or a set value of the search problem when the search problem is set by the search problem setting program 161.

The individual-KPI / operating-parameter notification program 164 notifies each individual system 2 of the individual KPI condition(s) / operating parameter(s) for each individual system 2 decided by the individual-KPI / operating-parameter search program 162.

The data input/output module 17 includes a data input/output program for the KPI relational model generation module 15 and the individual system operating parameter deciding module 16 to transmit/receive data to/from the individual systems 2.

Each of the individual systems 2 (2-1, ..., 2-N) has a CPU 21, a memory 22, a communication apparatus 23, a program storage apparatus 24, and a data storage apparatus 28. The CPU 21 reads programs described later from the program storage apparatus 24 and executes each processing in cooperation with the memory 22 and the communication apparatus 23. The communication apparatus 23 is an interface for the individual systems 2 to transmit/receive data to/from the cooperative management system 1.

The program storage apparatus 24 stores an individual system operation module 25 and a parameter notification module 26.

The individual system operation module 25 includes an individual system operation program 251 and an individual KPI calculation program 252.

The individual system operation program 251 controls the system operation for achieving the purpose of the local system. The individual KPI calculation program 252 calculates the individual KPIs of the local system.

The parameter notification module 26 includes a controllable parameter notification program 261 and an individual KPI acceptability notification program 262.

The controllable parameter notification program 261 notifies the cooperative management system 1 of the individual KPIs / operating parameters capable of controlling the total KPI from among the individual KPIs / operating parameters of the local system.

The individual KPI acceptability notification program 262 judges whether or not the individual KPIs of the local system will achieve the goal of the local system when the individual KPI conditions / operating parameters that will optimize the total KPI received from the cooperative management system 1 have been accepted.

Then, if the individual KPI will achieve the goal of the local system, the individual KPI acceptability notification program 262 notifies the cooperative management system 1 that the received individual KPI condition / operating parameter is acceptable. Furthermore, if the individual KPI will not achieve the goal of the local system, the individual KPI acceptability notification program 262 notifies the cooperative management system 1 that the received individual KPI condition / operating parameter is not acceptable, and of a necessary additional condition(s) for the individual KPI to achieve the purpose of the local system.

When notified by each individual system 2 that the individual KPI condition / operating parameter is unacceptable and notified by the individual 2 of the additional condition(s), the search problem setting program 161 of the cooperative management system 1 additionally sets the additional condition(s) to the search problem. Then, the individual-KPI / operating-parameter search program 162 again searches for and decides the solution of the search problem for which additional condition(s) is additionally set.

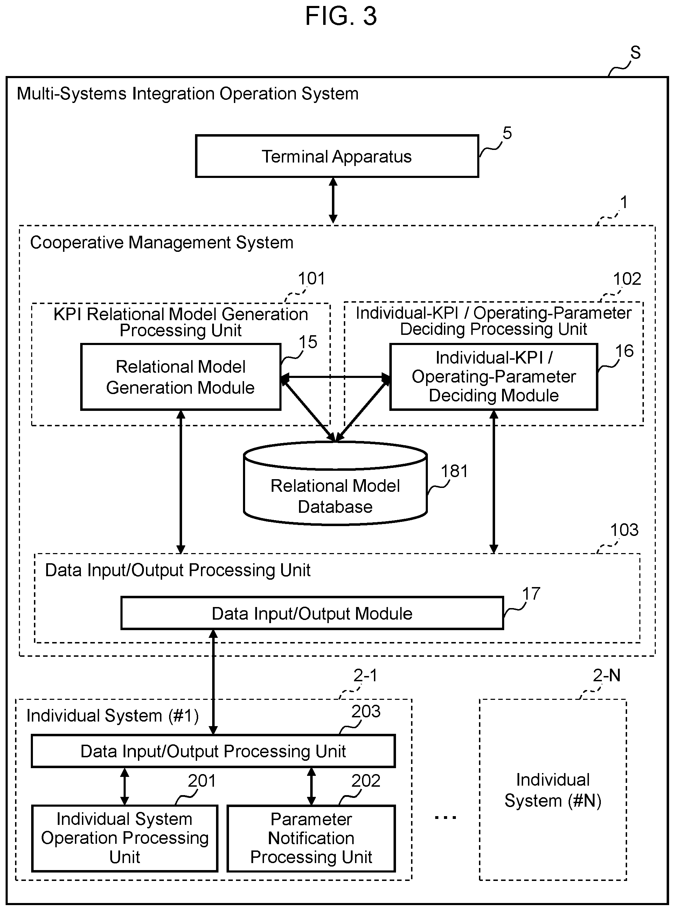

Fig. 3 is a functional block diagram illustrating the configuration of the multi-systems integration operation system S according to the embodiment.

The cooperative management system 1 has, as illustrated in Fig. 3, a KPI relational model generation processing unit 101, an individual-KPI / operating-parameter deciding processing unit 102, and a data input/output processing unit 103. Furthermore, a terminal apparatus 5 including a display screen is connected to the cooperative management system 1.

The KPI relational model generation processing unit 101 is implemented by execution of the KPI relational model generation module 15 by the CPU 11 (Fig. 2). The individual-KPI / operating-parameter deciding processing unit 102 is implemented by execution of the individual system operating parameter deciding module 16 by the CPU 11.

Furthermore, the data input/output processing unit 103 is implemented by execution of a data input/output module 17 by the CPU 11. The data input/output processing unit 103 executes data input/output processing for the KPI relational model generation processing unit 101 and the individual-KPI / operating-parameter deciding processing unit 102 to transmit/receive data to/from the individual systems 2.

Each of the individual systems 2 (2-1, ..., 2-N) has an individual system operation processing unit 201, a parameter notification processing unit 202, and a data input/output processing unit 203 respectively.

The individual system operation processing unit 201 is implemented by execution of the individual system operation module 25 (Fig. 2) by the CPU 21 (Fig. 2). The parameter notification processing unit 202 is implemented by execution of the parameter notification module 26 (Fig. 2) by the CPU 21.

The data input/output processing unit 203 is implemented by execution of a data input/output module (which is not illustrated in the drawing) by the CPU 21. The data input/output processing unit 203 executes data input/output processing for the individual system operation processing unit 201 and the parameter notification processing unit 202 to transmit/receive data to/from the cooperative management system 1.

The KPI relational model generation processing unit 101 of the cooperative management system 1 generates a relational model between the total KPI and the individual KPI / operating parameter and stores it in the relational model database 181. The individual-KPI / operating-parameter deciding processing unit 102 searches for the individual KPIs / operating parameters that will optimize the total KPI as a solution of the search problem based on the relational model read from the relational model database 181 and notifies each individual system 2 of the decided individual KPIs / operating parameters.

If the individual KPI / operating parameter reported by the cooperative management system 1 will achieve the goal of the local system, the parameter notification processing unit 202 of each individual system 2 notifies the cooperative management system 1 that such individual KPI / operating parameter is acceptable; and if the individual KPI / operating parameter reported by the cooperative management system 1 will not achieve the goal of the local system, the parameter notification processing unit 202 of each individual system 2 notifies the cooperative management system 1 of the unacceptability together with the additional condition(s).

When notified by the individual system 2 that the individual KPI / operating parameter is unacceptable and of the additional condition(s), the cooperative management system 1 re-executes the search for a solution by adding the reported additional condition(s) to the search problem, searches for the individual KPIs / operating parameters that will optimize the total KPI, and notifies each individual system 2 of the found individual KPIs / operating parameters again.

The cooperative management system 1 repeats searching for the solution of the search problem until specified conditions (specified time, a specified number of times, notification that the individual KPIs / operating parameters from the individual systems 2 are acceptable, etc.) are satisfied.

(Relational Model Generation Processing of Cooperative Management System 1)

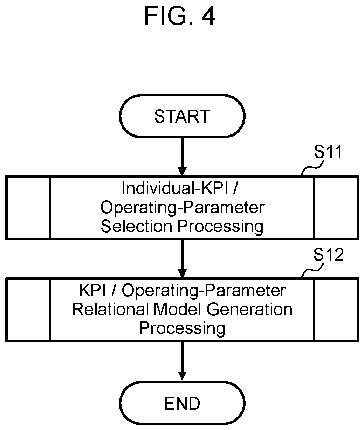

Fig. 4 is a flowchart illustrating the relational model generation processing of the cooperative management system 1 according to the embodiment. The KPI relational model generation processing unit 101 of the cooperative management system 1 executes the relational model generation processing according to a designated schedule or at the timing designated by an instruction from the user.

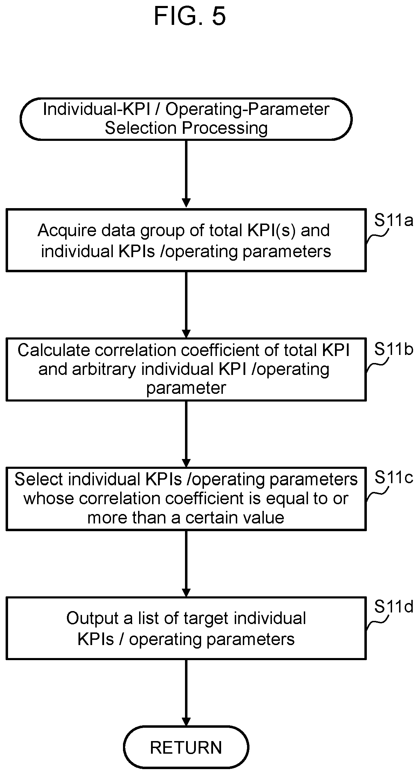

Firstly, in step S11, the individual-KPI / operating-parameter selection program 153 executes the individual-KPI / operating-parameter selection processing. The details of the individual-KPI / operating-parameter selection processing will be described later with reference to Fig. 5.

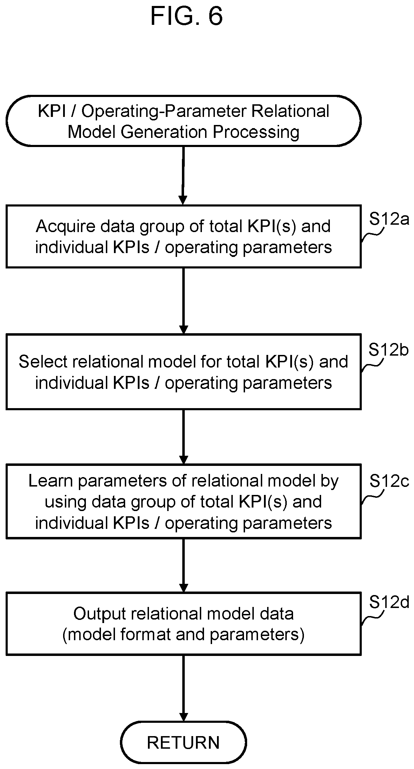

Next, in step S12, the KPI / operating-parameter relational model generation program 154 executes the KPI / operating-parameter relational model generation processing. The details of the KPI / operating-parameter relational model generation processing will be described later with reference to Fig. 6.

In the relational model generation processing, data of the total KPI, the individual KPIs, and the operating parameters of the individual systems 2, which are capable of controlling them, are obtained and their relationship is modeled in a data-driven manner. Furthermore, the collection of the data is limited to data of the individual KPIs that will affect variations of the overall KPI. Furthermore, the controllable operating parameters can be obtained by inquiring of the individual systems 2. Furthermore, a relational graph provided by the user may be used for the basis of the relational model. Furthermore, modeling may be performed not only as a direct relationship between the total KPI and the individual KPIs, but also as a relationship with intermediate variables interposed between them.

(Individual-KPI / Operating-Parameter Selection Processing)

Fig. 5 is a flowchart illustrating the individual-KPI / operating-parameter selection processing in step S11 (Fig. 4).

Firstly, in step S11a, the individual-KPI / operating-parameter selection program 153 obtains a data group of the total KPI and the individual KPIs / operating parameters of arbitrary individual systems 2. The operating parameters are limited in advance to operating parameters capable of controlling the individual KPIs of the respective individual systems 2. Under this circumstance, the total KPI may be replaced with an arbitrary indicator used for calculating the total KPI. Furthermore, the obtained data group may be actual operation data or simulation data.

Next, in step S11b, the individual-KPI / operating-parameter selection program 153 calculates a numerical value, for example, a correlation coefficient representing the relationship between the total KPI and arbitrary individual KPIs / operating parameters, based on the data group obtained in step S11a.

Next, in step S11c, the individual-KPI / operating-parameter selection program 153 selects an individual KPI(s) / operating parameter(s) regarding which the numerical value representing the relationship with the total KPI as calculated in step S11b satisfies the specified condition, for example, the correlation coefficient is equal to or more than a certain value.

Next, in step S11d, the individual-KPI / operating-parameter selection program 153 outputs a list of the individual KPIs / operating parameters selected in step S11c as target individual KPIs / operating parameters which have the degree of influence on the total KPI equal to or more than a certain value.

Incidentally, the selection of the target individual KPIs / operating parameters may be designated by external input without depending on the individual-KPI / operating-parameter selection processing. In this case, the individual-KPI / operating-parameter selection processing is omitted.

(KPI / Operating-Parameter Relational Model Generation Processing)

Fig. 6 is a flowchart illustrating the KPI / operating-parameter relational model generation processing in step S12 (Fig. 4).

Firstly, in step S12a, the KPI / operating-parameter relational model generation program 154 obtains a data group of the total KPI and the target individual KPIs / operating parameters selected by the individual-KPI / operating-parameter selection processing (Fig. 5) or the external input. Similarly to step S11a (Fig. 5), the total KPI may be an arbitrary indicator used to calculate the total KPI. Furthermore, the data group to be obtained may be actual operation data or simulation data.

Next, in step S12b, the KPI / operating-parameter relational model generation program 154 selects a model format of the relational mode to be generated for the data group of the total KPI and the individual KPIs / operating parameters of the arbitrary individual systems 2 which are obtained in step S12a. The model format of the relational model may be linear or nonlinear. If the search problem embedding the relational model is a linear programming problem, the linear model is selected; and if it is a simulation-based search problem, either of the linear model or the nonlinear mode with higher accuracy is selected.

Next, in step S12c, the KPI / operating-parameter relational model generation program 154, in the format of a relational model selected in step S12b, performs machine learning of parameters (coefficients) of the relational model in which the total KPI is an objective variable and the individual KPIs / operating parameters are explanatory variables. Incidentally, in addition to the individual KPIs / operating parameters, for example, a numerical value representing the system status may be added to the explanatory variables of the relational model to improve the model accuracy.

Next, in step S12d, the KPI / operating-parameter relational model generation program 154 outputs relational model data (the model format and the parameters) learned in step S12c.

(Individual-KPI / Operating-Parameter Deciding Processing According to Embodiment)

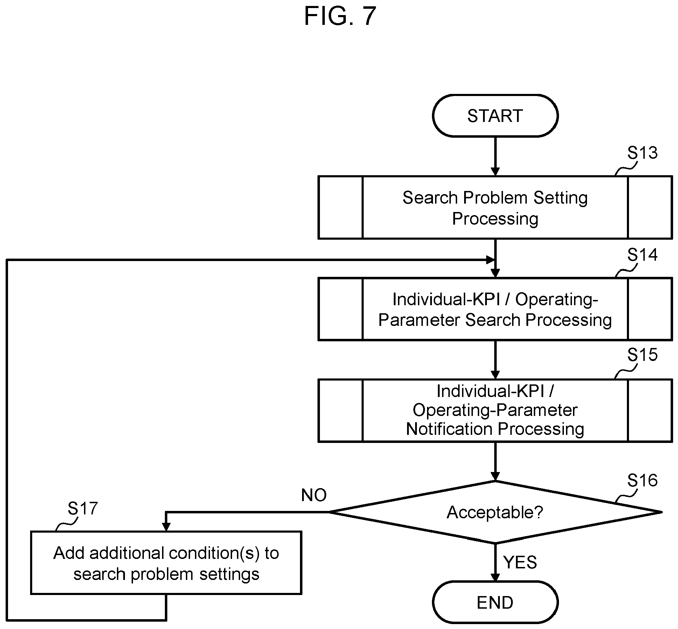

Fig. 7 is a flowchart illustrating the individual-KPI / operating-parameter deciding processing according to the embodiment. The individual-KPI / operating-parameter deciding processing unit 102 of the cooperative management system 1 executes the individual-KPI / operating-parameter deciding processing according to a designated schedule or at the timing designated by an instruction from the user. The individual-KPI / operating-parameter deciding processing is executed at a timing independently of or in synchronization with the relational model generation processing (Fig. 4).

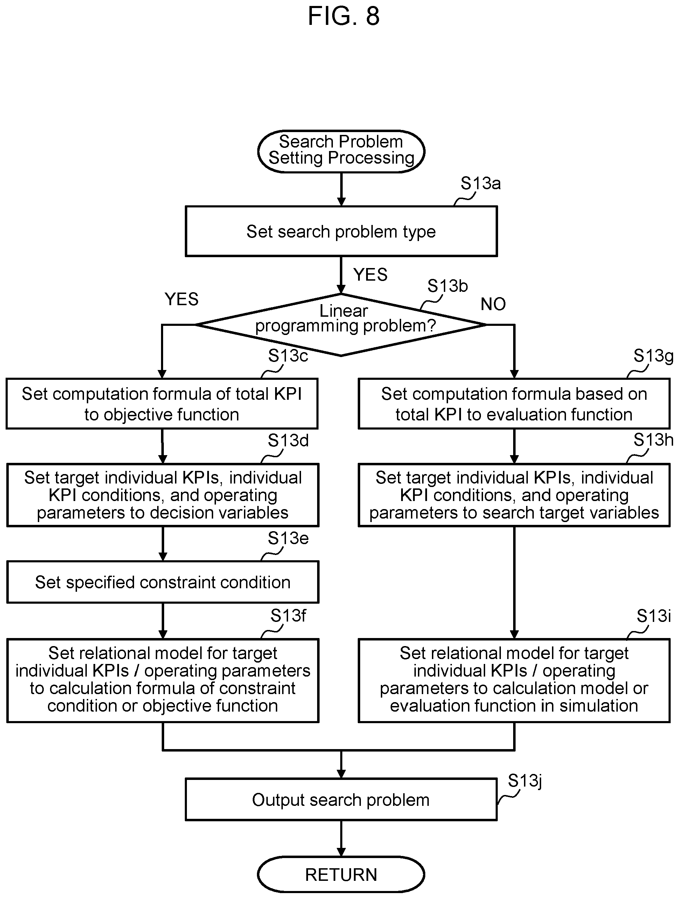

Firstly, in step S13, the search problem setting program 161 executes search problem setting processing. The details of the search problem setting processing will be described later with reference to Fig. 8.

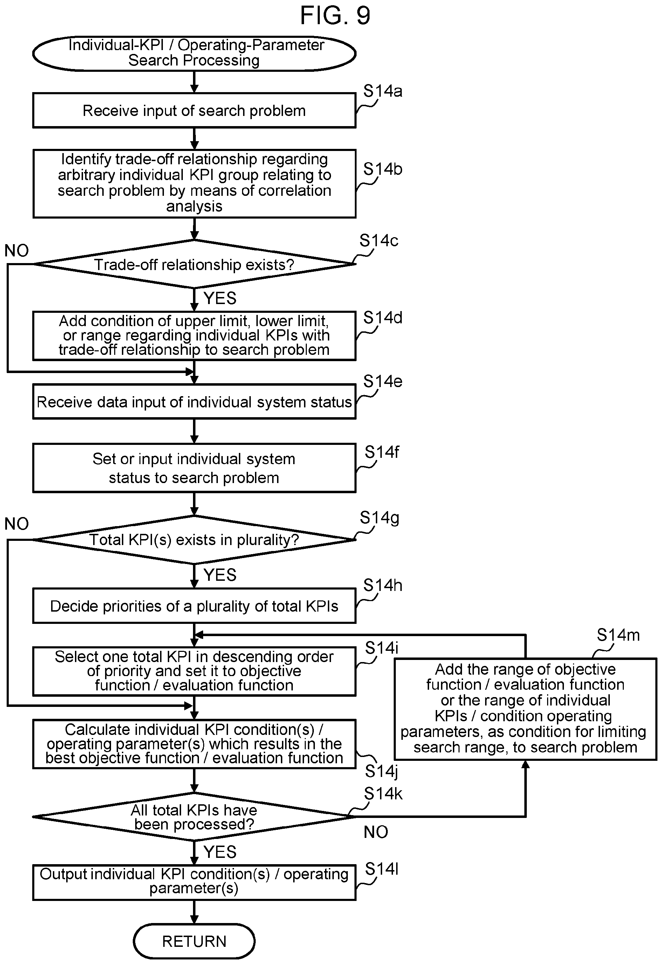

Next, in step S14, the individual-KPI / operating-parameter search program 162 executes individual-KPI / operating-parameter search processing. The details of the individual-KPI / operating-parameter search processing will be described later with reference to Fig. 9.

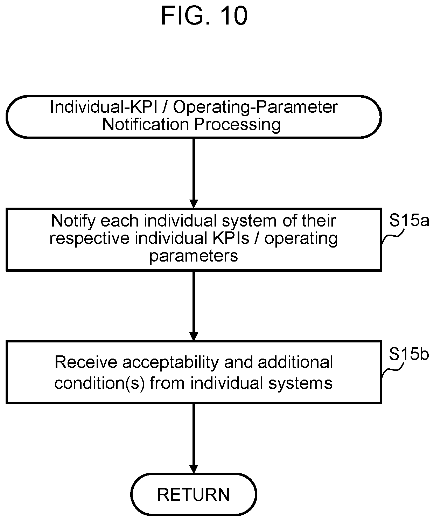

Next, in step S15, the individual-KPI / operating-parameter notification program 164 executes individual-KPI / operating-parameter notification processing. The details of the individual-KPI / operating-parameter notification processing will be described later with reference to Fig. 10.

Next, in step S16, the individual-KPI / operating-parameter notification program 164 judges whether or not the acceptability of the operating parameter(s) has been received from the individual system(s) 2 in step S15. The individual-KPI / operating-parameter notification program 164 terminates the individual-KPI / operating-parameter deciding processing if the acceptability has been received (YES in step S16) and proceeds to processing in step 17 if the unacceptability has been received (NO in step S16).

In step S17, the individual-KPI / operating-parameter notification program 164: adds, to the search problem set in step S13, the additional condition(s) regarding the individual KPI(s) / operating parameter(s) received together with the individual KPI(s) / operating parameter(s) determined to be unacceptable in step S16; and then returns to the processing in step S14. In step S14 where the processing has returned from step S17, the individual-KPI / operating-parameter search program 162 re-executes the search processing of the individual KPI(s) / operating parameter(s) in the search problem including the additional condition(s) additionally set in step S17.

In the individual-KPI / operating-parameter deciding processing, the relational model between the total KPI and the individual KPIs and the relational model between the individual KPIs and the controllable operating parameters are reflected in limitations of the search range, a constraint definition, and an objective function / compensation definition of the linear programming problem, and the parameters of the individual systems for improving the total KPI are determined. Furthermore, the relationship between the total KPI, the individual KPIs, and the controllable operating parameters is converted and introduced into a constraint of the linear programming problem. Furthermore, the relationship between the total KPI, the individual KPIs, and the controllable operating parameters is introduced into an objective function computation formula of the linear programming problem. Furthermore, the relationship between the total KPI, the individual KPIs, and the controllable operating parameters is converted and introduced into a calculation model of a simulator used for an optimum solution search. Furthermore, the relationship between the total KPI, the individual KPIs, and the controllable operating parameters may be introduced in a compensation computation formula of reinforcement learning.

(Search Problem Setting Processing)

Fig. 8 is a flowchart illustrating the search problem setting processing in step S13 (Fig. 7).

Firstly, in step S13a, the search problem setting program 161 sets the type of the search problem. The type of the search problem is set to the "linear programming problem" or "simulation-based search problem" if the format of the relational model generated by the KPI / operating-parameter relational model generation processing (Fig. 6) is a "linear model"; and the type of the search problem is set to the "simulation-based search problem" if the format of the relational model is a "non-linear model." In the case of the "linear model," as in step S12b (Fig. 6), either the "linear programming problem" or the "simulation-based search problem" with higher model accuracy is set as the problem type. Incidentally, the problem type set in step S13a illustrates the "linear programming problem" and "simulation-based search problem," but is not limited to these and may be other problem types.

Next, in step S13b, the search problem setting program 161 proceeds to processing in step S13c if the type of the search problem set in step S13a is the "linear programming problem"; and the search problem setting program 161 proceeds to processing in step S13g if it is the "simulation-based search problem."

In step S13c, the search problem setting program 161 sets a computation formula of the total KPI to the objective function of the linear programming problem. Next, in step S13d, the search problem setting program 161 sets the target individual KPIs, the individual KPI conditions, and the operating parameters to decision variables of the linear programming problem. Then, in step S13e, the search problem setting program 161 sets specified constraint condition(s). Next, in step S13f, the search problem setting program 161 sets a relational model of the target individual KPIs / operating parameters to a calculation formula of the constraint condition(s) or the objective function of the linear programming problem. When step S13f is completed, the search problem setting program 161 proceeds to processing in step S13j.

On the other hand, in step S13g, the search problem setting program 161 sets a computation formula of the total KPI in the evaluation function of the simulation-based search problem. Next, in step S13h, the search problem setting program 161 sets the target individual KPIs, the individual KPI conditions, and the operating parameters as search target variables of the simulation-based search problem. Then, in step S13i, the search problem setting program 161 sets the relational model of the target individual KPIs / operating parameters to a calculation model in the simulation or a calculation formula of the evaluation function. When step S13i is completed, the search problem setting program 161 proceeds to processing in step S13j.

In step S13j, the search problem setting program 161 outputs the search problem set in the aforementioned processing.

(Individual-KPI / Operating-Parameter Search Processing)

Fig. 9 is a flowchart illustrating the individual-KPI / operating-parameter search processing in step S14 (Fig. 7).

Firstly, in step S14a, the individual-KPI / operating-parameter search program 162 accepts input of the search problem set by the search problem setting processing (Fig. 7). Next, in step S14b, a trade-off relationship (for example, the correlation coefficient is negative) is identified for a set of arbitrary individual KPIs related to the search problem by means of correlation analysis.

Next, in step S14c, the individual-KPI / operating-parameter search program 162 judges whether or not the trade-off relationship has been identified in step S14b. The individual-KPI / operating-parameter search program 162 proceeds to processing in step S14d if there is the trade-off relationship (YES in step S14c) and proceeds to processing in step S14e if there is no trade-off relationship (NO in step S14c).

In step S14d, regarding the individual KPIs with the trade-off relationship, the individual-KPI / operating-parameter search program 162 adds conditions such as the upper limit, lower limit, or range of the individual KPIs / operating parameters in consideration of the trade-off as conditions to the search problem. The upper limit, lower limit, or range of the individual KPI / operating parameter are obtained by, for example, inquiring of the individual systems 2.

In step S14e, the individual-KPI / operating-parameter search program 162 accepts data input of the status of each individual system 2.

Next, in step S14f, the individual-KPI / operating-parameter search program 162 sets or inputs the latest status of the individual systems obtained by the individual system status acquisition program 163 to the search problem. Then, in step S14g, the individual-KPI / operating-parameter search program 162 judges whether the target total KPI(s) is provided in plurality or not. The individual-KPI / operating-parameter search program 162 proceeds to processing in step S14h if the target total KPI(s) is provided in plurality (YES in step S14g); and it proceeds to processing in step S14j if there is one target total KPI (NO in step S14g).

In step S14h, the individual-KPI / operating-parameter search program 162 decides the priorities of the plurality of the total KPIs. The priorities may be in the order of importance according to the purpose of the multi-systems integration operation system S.

Next, in step S14i, the individual-KPI / operating-parameter search program 162 selects one from the total KPIs in descending order of priorities and sets it to the objective function / evaluation function.

Next, in step S14j, the individual-KPI / operating-parameter search program 162 calculates individual KPI conditions / operating parameters which will optimize (for example, maximize) the objective function / evaluation function.

Incidentally, if the total KPIs are provided in plurality and the search problem is a linear programming problem, a weighted sum of the plural KPIs can be an objective function, or the range of the optimal solution can be narrowed down by applying the total KPIs one by one when solving the search problem. If the total KPIs are provided in plurality and the search problem is simulation-based optimization, it can also be adopted as a solution candidate only if all the total KPIs satisfy the designated conditions in the simulation results.

Next, in step S14k, the individual-KPI / operating-parameter search program 162 judges whether or not it has processed all the total KPIs. The individual-KPI / operating-parameter search program 162 proceeds to processing in step S14l if all the total KPIs have been processed (YES in step S14k); and it proceeds to processing in step S14m if any total KPI(s) remains unprocessed (NO in step S14k). If there is one total KPI (NO in step S14g), step S14k is YES.

In step S14l, the individual-KPI / operating-parameter search program 162 outputs the individual KPI conditions / operating parameters.

On the other hand, in step S14m, the individual-KPI / operating-parameter search program 162 adds the range of the objective function / evaluation function calculated in step S14j or the range of the individual KPI conditions / operating parameters to the search problem as a condition for limiting the search range. When step S14m is completed, the individual-KPI / operating-parameter search program 162 proceeds to processing in step S14i. In step S14i where the processing has returned from step S14m, the processing is executed for the total KPI with a higher priority next to the total KPI selected the last time.

(Individual-KPI / Operating-Parameter Notification Processing)

Fig. 10 is a flowchart illustrating the individual-KPI / operating-parameter notification processing in step S15 (Fig. 7).

Firstly, in step S15a, the individual-KPI / operating-parameter notification program 164 notifies each individual system 2 of each individual KPI / operating parameter of each individual system 2 which is the search result by the individual-KPI / operating-parameter search processing (Fig. 9). Next, in step S15b, the individual-KPI / operating-parameter notification program 164 receives the acceptability of each individual KPI / operating parameter of each notified individual system 2 and the additional condition(s) (the range of the individual KPI and the range of the operating parameter) from each individual system 2.

Incidentally, in the individual-KPI / operating-parameter deciding processing described with reference to Fig. 7 to Fig. 10, the type of the search problem to which one relational model is applied is set to either the linear programming problem or the simulation problem, but is not limited to these types. In other words, one relational model may be set to all types of search problems and the type of the search problem with a better result of the total KPI may be adopted.

(Display Screen 500 of Terminal Apparatus 5)

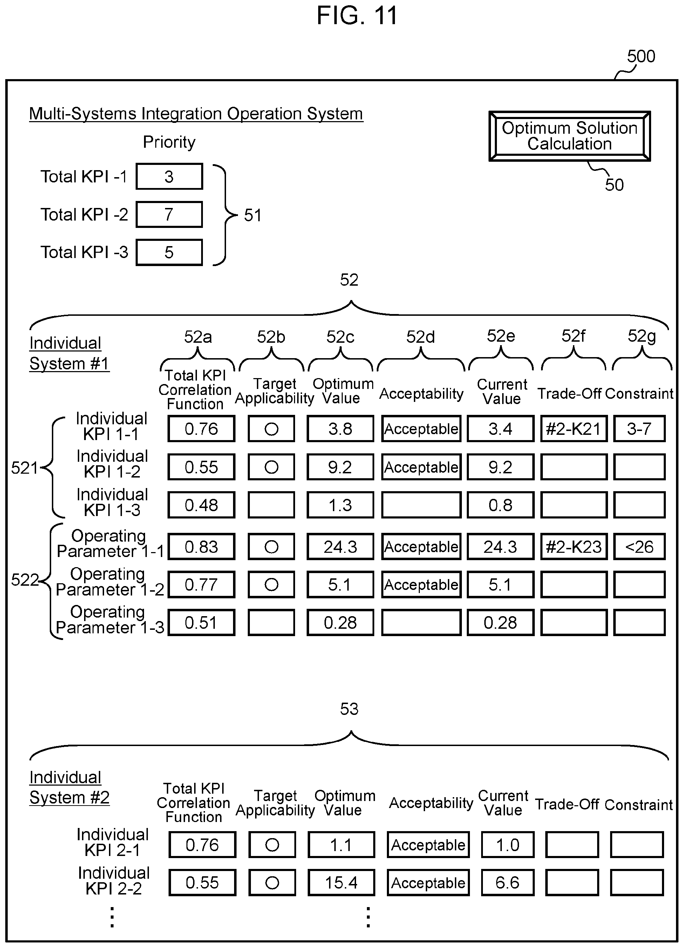

Fig. 11 is a diagram illustrating a display screen 500 of the terminal apparatus 5 connected to the cooperative management system 1. In the example of Fig. 11, the individual systems other than the individual system #1 are the same, except that the individual KPIs and the operating parameters are different and their illustrations are omitted as appropriate.

The display screen 500 includes an optimum solution calculation button 50, total KPIs and priorities 51, individual KPIs and operating parameters 52, 53, and so on of the individual systems. When optimum solution calculation button 50 is pressed, the individual-KPI / operating-parameter deciding processing (Fig. 7) is executed.

The total KPIs and the priorities are displayed in the total KPIs and the priorities 51. In the example of Fig. 11, there are total KPIs 1, 2, 3, their priorities are 3, 7, 5, and the total KPI 1 has the highest priority.

The individual KPIs and the operating parameters 52 of the individual system #1 include individual KPIs 521 and operating parameters 522. In the example of Fig. 11, the individual KPIs 521 have the individual KPIs 1-1, 1-2, 1-3 and the operating parameters 522 have the operating parameters 1-1, 1-2, 1-3.

Furthermore, the individual KPIs and the operating parameters 52 have a total KPI correlation function 52a, target applicability 52b, an optimum value 52c, acceptability 52d, a current value 52e, trade-off 52f, and a constraint 52g for each individual KPI and each operating parameter.

The total KPI correlation function 52a represents a correlation coefficient between the relevant individual KPI / operating parameter of the individual system #1 and the total KPI for which the relevant individual KPI / operating parameter is used for the calculation. The example of Fig. 11 shows that the correlation coefficient of the individual KP11-1 of the individual system #1 is "0.76."

Regarding the target applicability 52b, if the value of the total KPI correlation function 52a is more than a threshold value and if the relevant individual KPI / operating parameter corresponds to an optimization target by the search problem solution, "o" is displayed; and if the above-described conditions are not satisfied, a blank is displayed. The example of Fig. 11 shows "o" for the individual KPI 1-1 of the individual system #1.

The optimum value 52c represents the optimum value of the relevant individual KPI / operating parameter and, for example, the value of the relevant individual KPI / operating parameter optimized by the search problem solution is displayed. The example of Fig. 11 shows that the optimum value of the individual KPI 1-1 of the individual system #1 is "3.6."

The acceptability 52d represents the result of judging whether the relevant individual KPI / operating parameter optimized by the search problem solution is acceptable or unacceptable by the individual system #1; and "Acceptable" is displayed if it is acceptable; and a blank is displayed if it is unacceptable. The example of Fig. 11 shows that the individual KPI 1-1 of the individual system #1 is "Acceptable."

The current value 52e is a current value of the relevant individual KPI / operating parameter, and is a value calculated by considering the current status of the individual system #1 in the case of the individual KPI, and a current setting value in the case of the operating parameter. The example of Fig. 11 shows that the current value of the individual KPI 1-1 of the individual system #1 is "3.4."

The trade-off 52f represents another individual KPI / operating parameter that has a trade-off relationship with the relevant individual KPI / operating parameter. The example of Fig. 11 shows that the individual KPI 1-1 of the individual system #1 has a trade-off relationship with the individual KPI 21 of the individual system #2 and the operating parameter 1-1 of the individual system #1 has a trade-off relationship with the individual KPI 23 of the individual system #2.

The constraint 52g is a condition for the upper limit, lower limit, or range of the relevant individual KPI / operating parameter. The condition for the upper limit, lower limit, or range of the individual KPI may be set as a condition for avoiding a trade-off relationship or may be set as a prerequisite to be met. In the example of Fig. 11, it is shown that the individual KP11-1 of the individual system #1 is limited by values of "3 to 7." Furthermore, the operating parameter 1-1 of the individual system #1 is shown to be limited by values "less than 26."

(Advantageous Effects of Embodiment)

According to the aforementioned embodiment, the relation model between the total KPI of the multi-systems integration operation system S and the individual KPIs of the respective individual system 2 or the operating parameters of the respective individual systems 2 for controlling the individual KPIs is used. Then, the individual KPI conditions or the operating parameters which will improve the total KPI are searched for and decided and the respective individual systems are notified of the decided individual KPI conditions / operating parameters. Therefore, the respective systems can be operated appropriately, without any advance input of candidates for the conditions of the individual KPIs and the operating parameters, in order to improve the total KPI of the multi-systems integration operation system S more.

Moreover, while operating the multi-systems integration operation system S, the relational model for the total KPI of the multi-systems integration operation system S, the individual KPIs of the respective individual systems 2 which have influence on the total KPI, and the controllable operating parameters which have influence on the individual KPIs is constructed and updated sequentially. Therefore, the individual KPI conditions / operating parameters for controlling the individual systems 2 can be decided based on the model in which the latest system status is reflected.

Furthermore, by selecting the operating parameters capable of controlling the individual KPIs and using minimum information, the individual KPI conditions / operating parameters can be decided easily and appropriately even if the number of the individual systems 2 and the operating parameters becomes enormous.

Furthermore, the individual KPIs or the operating parameters whose correlation with the total KPI is equal to or more than a certain value are selected and the minimum information is used, so that the individual KPI conditions / operating parameters can be decided easily and appropriately even if the number of the total KPI, the individual KPIs, and the operating parameters becomes enormous.

Furthermore, the aforementioned relational model is applied to the search problem to search for the individual KPI conditions / operating parameters which will improve the total KPI, so that the individual KPI conditions / operating parameters that are decided by the search problem to which the relational model is applied become reliable and have good grounds based on the past achievements of the multi-systems integration operation system S and the individual system 2.

Furthermore, the characteristics of the search problem are selected by the formation method of the relational model, so that the characteristics of the search problem become controllable and, therefore, the search problem with more appropriate characteristics can be used for problems.

Furthermore, the individual systems 2 are inquired of whether the individual KPI conditions / operating parameters decided by the search problem can be executed or not; and if they cannot be executed, the constraints received, together with the notice of the above-mentioned negative result, from the individual systems 2 are additionally set to the search problem, thereby searching for the individual KPI conditions / operating parameters again. Therefore, it is possible to avoid the inconvenience of degradation of the individual KPIs by improving the total KPI.

Furthermore, even if there are a plurality of total KPIs, it is possible to decide the individual KPI conditions / operating parameters and control the respective individual systems 2 appropriately.

Furthermore, the range of the individual KPI conditions / operating parameters which are decided regarding the total KPIs with the first priority among the plurality of total KPIs is set as a condition for limiting the search range when deciding the individual KPI conditions / operating parameters regarding the total KPIs with the second priority lower than the first priority. Therefore, the individual KPI conditions / operating parameters can be decided to improve the plurality of the respective total KPIs, while prioritizing the total KPIs with high priority.

Furthermore, whether or not any conflicts exist in a combination of arbitrary individual KPIs is judged; and an additional condition(s) is set in advance when deciding the individual KPI conditions / the operating parameters for controlling the individual KPIs regarding the combination of the individual KPIs having the conflict. Therefore, even if there is any conflict in the combination of the individual KPIs, the individual KPI conditions / operating parameters for controlling the individual systems 2 can be decided appropriately.

Furthermore, the additional condition(s) which is added in advance when searching for and deciding the individual KPI conditions / the operating parameters for controlling the individual KPIs regarding the combination of the individual KPIs having any conflict is an upper limit, a lower limit, or a range of the individual KPI conditions / operating parameters. Therefore, the individual KPI conditions / operating parameters can be searched for efficiently by narrowing down the search range in advance.

(Application Examples of Embodiment)

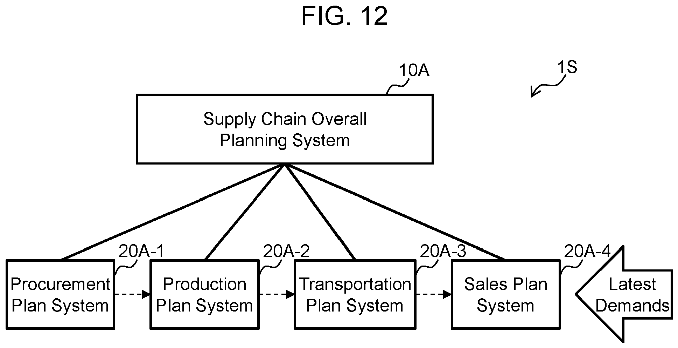

Fig. 12 is a diagram illustrating an example of application of the multi-systems integration operation system S according to the embodiment to a supply chain planning & operation system 1S.

The supply chain planning & operation system 1S is configured by including a procurement plan system 20A-1, a production plan system 20A-2, a transportation plan system 20A-3, a sales plan system 20A-4, and a supply chain overall planning system 10A for managing the cooperation between these subsystems. The supply chain overall planning system 10A can establish a procurement plan, a production plan, a transportation plan, and sales plane which optimize an overall plan (such as sales, cost, and profits) with the supply chain planning & operation system 1S in a state where the latest demands are input.

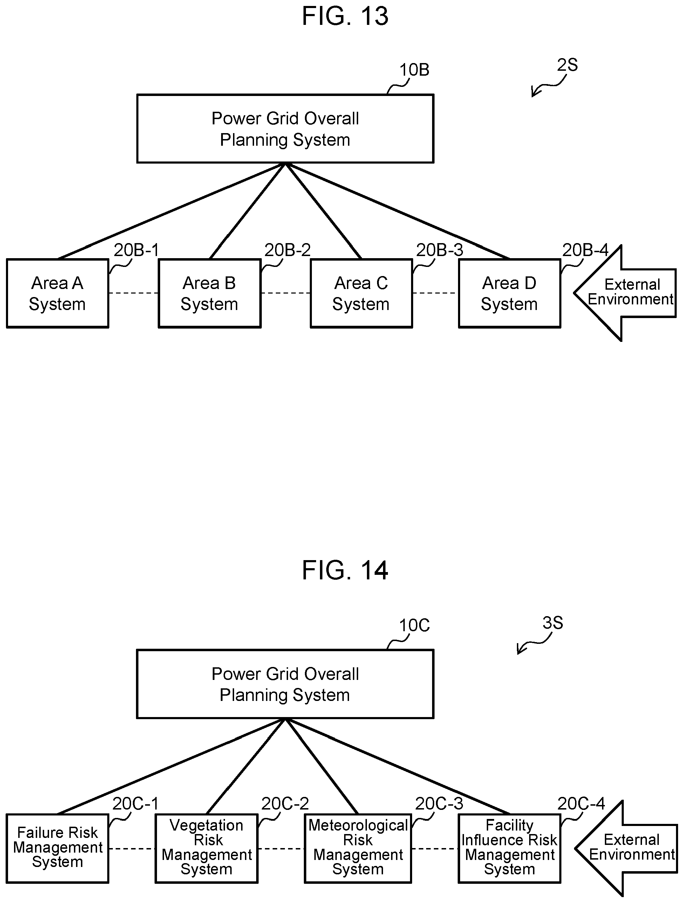

Fig. 13 is a diagram illustrating an example of application of the multi-systems integration operation system S according to the embodiment to a power grid maintenance management system 2S.

The power grid maintenance management system 2S is configured by including an area A system 20B-1, an area B system 20B-2, an area C system 20B-3, an area D system 20B-4, and a power grid overall planning system 10B for managing the cooperation between these subsystems. The power grid overall planning system 10B can establish a maintenance management plan for each area which will further improve an overall plan (such as uninterrupted time and cost) with the power grid maintenance management system 2S in the latest state with inputs of the latest external environment (such as electric power demands and weather conditions).

Furthermore, as illustrated in Fig. 14, a power grid overall planning system 10C can establish a maintenance management plan for each risk factor which will further improve the overall plan, with the power grid maintenance management system 2S in the latest state with the inputs of the latest external environment.

The present invention is not limited to the aforementioned embodiments, but includes various variations. For example, the aforementioned embodiments have been described in detail in order to explain the present invention in an easily comprehensible manner and are not necessarily limited to those having all the configurations explained above. Furthermore, unless any contradiction occurs, part of the configuration of a certain embodiment can be replaced with the configuration of another embodiment and the configuration of another embodiment can be added to the configuration of a certain embodiment. Also, regarding part of the configuration of each embodiment, it is possible to add, delete, replace, integrate, or distribute the configuration. Furthermore, the configurations and processing indicated in the embodiments can be distributed, integrated, or replaced as appropriate on the basis of processing efficiency or implementation efficiency.

REFERENCE SIGNS LIST

S:     multi-systems integration operation system
1:     cooperative management system

2:      individual system
153:    individual-KPI / operating-parameter selection program
154:    KPI / operating-parameter relational model generation program
161:    search problem setting program
162:    individual-KPI / operating-parameter search program
164:    individual-KPI / operating-parameter notification program
11:     CPU
12:     memory

**Claims**

1. A cooperative management system for causing a plurality of individual systems to operate in cooperation with each other as one overall system, the cooperative management system comprising:

   a search unit that, by using a relational model between an overall indicator which is an evaluation indicator regarding the overall system, and individual indicators which are evaluation indicators regarding respective individual systems or operating parameters of the respective individual systems for controlling the individual indicators, searches for and decides conditions of the individual indicators or the operating parameters which will improve the overall indicator; and
   a notification unit that notifies the respective individual systems of the conditions of the individual indicators or the operating parameters which are decided by the search unit.

2. The cooperative management system according to claim 1,
   further comprising a model generation unit that generates the relational model based on the overall indicator and the individual indicators or the operating parameters.

3. The cooperative management system according to claim 2,
   further comprising a selection unit that selects the individual indicators or the operating parameters which are capable of controlling the overall indicator.

4. The cooperative management system according to claim 3,
   wherein the selection unit selects the individual indicators or the operating parameters regarding each of which a correlation with the overall indicator is equal to or more than a certain value.

5. The cooperative management system according to claim 1,
   further comprising a search problem setting unit that applies the relational model to a search problem to search for the conditions of the individual indicators or the operating parameters which will improve the overall indicator.

6. The cooperative management system according to claim 5,
   wherein the search problem setting unit selects characteristics of the search problem by a formation method of the relational model.

7. The cooperative management system according to claim 1,

   wherein the notification unit receives acceptability of each of the conditions of the individual indicators or the operating parameters, which has been reported to each of the individual systems, from each individual system; and if the conditions of the individual indicators or the operating parameters are not acceptable, the notification unit receives constraints for the individual indicators or constraints for the operating parameters from the respective individual systems; and
   wherein the search unit decides the conditions of the individual indicators or the operating parameters again based on the constraints.

8. The cooperative management system according to claim 1,

   wherein the overall indicator is provided in plurality; and
   wherein the search unit decides the conditions of the individual indicators or the operating parameters so as to improve the plurality of overall indicators.

9. The cooperative management system according to claim 8,
wherein the search unit sets a range of the conditions of the individual indicators or the operating parameters, which are decided for the overall indicators with a first priority among the plurality of overall indicators, to be a condition for limiting a search range when deciding the conditions of the individual indicators or the operating parameters for the overall indicators with a second priority lower than the first priority.

10. The cooperative management system according to claim 1,
wherein the search unit judges whether any conflict exists in a combination of the individual indicators; and when deciding the conditions of the individual indicators or the operating parameters for controlling the individual indicators for the combination of the individual indicators with the conflict, the search unit sets an additional condition.

11. The cooperative management system according to claim 10,
wherein the additional condition is an upper limit or lower limit of the conditions of the individual indicators or the operating parameters.

12. The cooperative management system according to claim 1,
wherein the conditions of the individual indicators or the operating parameters which are decided by the search unit are displayed on a display screen.

13. A cooperative management method executed by a cooperative management system for causing a plurality of individual systems to operate in cooperation with each other as one overall system,
the cooperative management method comprising each of the following processing:

by using a relational model between an overall indicator which is an evaluation indicator regarding the overall system, and individual indicators which are evaluation indicators regarding respective individual systems or operating parameters of the respective individual systems for controlling the individual indicators, searching for and deciding conditions of the individual indicators or the operating parameters which will improve the overall indicator; and
notifying the respective individual systems of the conditions of the individual indicators or the operating parameters which are decided.

FIG. 1

$$kpi = F(kpi1\_k1(\Theta 1), kpi2\_k2(\Theta 2), kpi3\_k3(\Theta 3), \cdots, kpiN\_kN(\Theta N)) \quad \cdots (1)$$

# FIG. 2

S

1

## Multi-Systems Integration Operation System

### Cooperative Management System

**Program Storage Apparatus** 14

KPI / Operating-Parameter Relational Model Generation Module 15

- Total KPI Calculation Program 151
- Individual System Data Collection Program 152
- Individual-KPI / Operating-Parameter Selection Program 153
- KPI / Operating Parameter Relational Model Generation Program 154

Individual-KPI / Operating-Parameter Deciding Module 16

- Search Problem Setting Program 161
- Individual-KPI / Operating-Parameter Search Program 162
- Individual System Status Acquisition Program 163
- Individual-KPI / Operating-Parameter Notification Program 164

Data Input/Output Module 17

11 CPU

12 Memory

13 Communication Apparatus

**Data Storage Apparatus** 181    182    18

- Relational Model Database
- Individual System Settings And Operation Database

2-1    2-N

### Individual System (#1)

**Program Storage Apparatus** 24

Individual System Operation Module 25
- Individual System Operation Program 251
- Individual KPI Calculation Program 252

Parameter Notification Module 26
- Controllable Parameter Notification Program 261
- Individual KPI Acceptability Notification Program 262

21 CPU

22 Memory

23 Communication Apparatus

Data Storage Apparatus 28

### Individual System (#N)

...

# FIG. 3

S

**Multi-Systems Integration Operation System**

Terminal Apparatus — 5

1

**Cooperative Management System**

101

**KPI Relational Model Generation Processing Unit**

Relational Model Generation Module — 15

102

**Individual-KPI / Operating-Parameter Deciding Processing Unit**

Individual-KPI / Operating-Parameter Deciding Module — 16

Relational Model Database — 181

103

**Data Input/Output Processing Unit**

Data Input/Output Module — 17

2-1

**Individual System (#1)**

Data Input/Output Processing Unit — 203

Individual System Operation Processing Unit — 201

Parameter Notification Processing Unit — 202

2-N

Individual System (#N)

· · ·

# FIG. 4

```
        ┌─────────────┐
        │    START    │
        └──────┬──────┘
               │                              S11
        ┌──────▼──────────────┐
        │   Individual-KPI /  │
        │  Operating-Parameter│
        │  Selection Processing│
        └──────┬──────────────┘
               │                              S12
        ┌──────▼──────────────┐
        │ KPI / Operating-Parameter│
        │ Relational Model Generation│
        │       Processing    │
        └──────┬──────────────┘
               │
        ┌──────▼──────┐
        │     END     │
        └─────────────┘
```

# FIG. 5

```
┌─────────────────────────────────────────┐
│  Individual-KPI / Operating-Parameter    │
│         Selection Processing             │
└─────────────────────────────────────────┘
                    │
                    ▼
┌─────────────────────────────────────────┐  S11a
│  Acquire data group of total KPI(s) and  │
│  individual KPIs /operating parameters   │
└─────────────────────────────────────────┘
                    │
                    ▼
┌─────────────────────────────────────────┐  S11b
│  Calculate correlation coefficient of     │
│  total KPI and arbitrary individual KPI   │
│           /operating parameter            │
└─────────────────────────────────────────┘
                    │
                    ▼
┌─────────────────────────────────────────┐  S11c
│  Select individual KPIs /operating        │
│  parameters whose correlation coefficient │
│  is equal to or more than a certain value │
└─────────────────────────────────────────┘
                    │
                    ▼
┌─────────────────────────────────────────┐  S11d
│    Output a list of target individual     │
│      KPIs / operating parameters          │
└─────────────────────────────────────────┘
                    │
                    ▼
             ┌──────────────┐
             │    RETURN     │
             └──────────────┘
```

# FIG. 6

KPI / Operating-Parameter Relational
Model Generation Processing

↓

Acquire data group of total KPI(s) and
individual KPIs / operating parameters — S12a

↓

Select relational model for total KPI(s) and
individual KPIs / operating parameters — S12b

↓

Learn parameters of relational model by
using data group of total KPI(s) and
individual KPIs / operating parameters — S12c

↓

Output relational model data
(model format and parameters) — S12d

↓

RETURN

FIG. 7

START

S13
Search Problem Setting
Processing

S14
Individual-KPI / Operating-
Parameter Search Processing

S15
Individual-KPI /
Operating-Parameter
Notification Processing

S16
Acceptable?

NO

S17
Add additional condition(s) to
search problem settings

YES

END

# FIG. 8

Search Problem
Setting Processing

S13a

Set search problem type

YES

S13b

YES — Linear programming problem? — NO

S13c

Set computation formula of total KPI to objective function

S13g

Set computation formula based on total KPI to evaluation function

S13d

Set target individual KPIs, individual KPI conditions, and operating parameters to decision variables

S13h

Set target individual KPIs, individual KPI conditions, and operating parameters to search target variables

S13e

Set specified constraint condition

S13f

Set relational model for target individual KPIs / operating parameters to calculation formula of constraint condition or objective function

S13i

Set relational model for target individual KPIs / operating parameters to calculation model or evaluation function in simulation

S13j

Output search problem

RETURN

## FIG. 9

Individual-KPI / Operating-Parameter
Search Processing

Receive input of search problem — S14a

Identify trade-off relationship regarding
arbitrary individual KPI group relating to
search problem by means of correlation
analysis — S14b

Trade-off relationship exists? — S14c
NO → YES

Add condition of upper limit, lower limit,
or range regarding individual KPIs with
trade-off relationship to search problem — S14d

Receive data input of individual system status — S14e

Set or input individual system
status to search problem — S14f

Total KPI(s) exists in plurality? — S14g
NO → YES

Decide priorities of a plurality of total KPIs — S14h

Select one total KPI in descending order
of priority and set it to objective
function / evaluation function — S14i

Add the range of objective
function / evaluation function
or the range of individual
KPIs / condition operating
parameters, as condition for limiting
search range, to search problem — S14m

Calculate individual KPI condition(s) /
operating parameter(s) which results in the
best objective function / evaluation function — S14j

All total KPIs have
been processed? — S14k
NO →
YES

Output individual KPI condition(s) / operating
parameter(s) — S14l

RETURN

FIG. 10

```
┌─────────────────────────────────────┐
│  Individual-KPI / Operating-Parameter │
│       Notification Processing          │
└─────────────────────────────────────┘
                  │
                  ▼
┌─────────────────────────────────────┐
│   Notify each individual system of their │   S15a
│   respective individual KPIs / operating │
│              parameters                   │
└─────────────────────────────────────┘
                  │
                  ▼
┌─────────────────────────────────────┐
│   Receive acceptability and additional   │   S15b
│   condition(s) from individual systems   │
└─────────────────────────────────────┘
                  │
                  ▼
         ┌─────────────────┐
         │     RETURN        │
         └─────────────────┘
```

# FIG. 11

500

**Multi-Systems Integration Operation System**

| Optimum Solution Calculation |
|---|

50

Priority

| | |
|---|---|
| Total KPI -1 | 3 |
| Total KPI -2 | 7 |
| Total KPI -3 | 5 |

51

52

**Individual System #1**

| | 52a Total KPI Correlation Function | 52b Target Applicability | 52c Optimum Value | 52d Acceptability | 52e Current Value | 52f Trade-Off | 52g Constraint |
|---|---|---|---|---|---|---|---|
| Individual KPI 1-1 | 0.76 | ○ | 3.8 | Acceptable | 3.4 | #2-K21 | 3-7 |
| Individual KPI 1-2 | 0.55 | ○ | 9.2 | Acceptable | 9.2 | | |
| Individual KPI 1-3 | 0.48 | | 1.3 | | 0.8 | | |
| Operating Parameter 1-1 | 0.83 | ○ | 24.3 | Acceptable | 24.3 | #2-K23 | <26 |
| Operating Parameter 1-2 | 0.77 | ○ | 5.1 | Acceptable | 5.1 | | |
| Operating Parameter 1-3 | 0.51 | | 0.28 | | 0.28 | | |

521 { Individual KPI 1-1, 1-2, 1-3

522 { Operating Parameter 1-1, 1-2, 1-3

53

**Individual System #2**

| | Total KPI Correlation Function | Target Applicability | Optimum Value | Acceptability | Current Value | Trade-Off | Constraint |
|---|---|---|---|---|---|---|---|
| Individual KPI 2-1 | 0.76 | ○ | 1.1 | Acceptable | 1.0 | | |
| Individual KPI 2-2 | 0.55 | ○ | 15.4 | Acceptable | 6.6 | | |

⋮

# FIG. 12

# FIG. 13

10B

2S

Power Grid Overall
Planning System

20B-1

20B-2

20B-3

20B-4

Area A
System

Area B
System

Area C
System

Area D
System

External
Environment

# FIG. 14

10C

3S

Power Grid Overall
Planning System

20C-1

20C-2

20C-3

20C-4

Failure Risk
Management
System

Vegetation
Risk
Management
System

Meteorological
Risk
Management
System

Facility
Influence Risk
Management
System

External
Environment

## INTERNATIONAL SEARCH REPORT

| International application No. |
|---|
| **PCT/JP2022/032263** |

**A.    CLASSIFICATION OF SUBJECT MATTER**

*G06Q 10/06*(2012.01)i; *B65G 61/00*(2006.01)i; *G06N 99/00*(2019.01)i; *G06Q 10/04*(2012.01)i
FI:    G06Q10/06 328; B65G61/00 100; G06N99/00 180; G06Q10/04

According to International Patent Classification (IPC) or to both national classification and IPC

**B.    FIELDS SEARCHED**

Minimum documentation searched (classification system followed by classification symbols)
    G06Q10/06; B65G61/00; G06N99/00; G06Q10/04

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2021/149096 A1 (MITSUBISHI ELECTRIC CORP) 29 July 2021 (2021-07-29) paragraphs [0010]-[0058], fig. 1-8 | 1, 12-13 |
| A | | 2-11 |
| A | JP 2019-105973 A (HITACHI LTD) 27 June 2019 (2019-06-27) paragraphs [0016]-[0070], fig. 1-3 | 1-13 |
| A | JP 2018-143046 A (DAIHEN CORP) 13 September 2018 (2018-09-13) paragraphs [0018]-[0228], fig. 1-29 | 1-13 |
| A | WO 2017/094100 A1 (HITACHI LTD) 08 June 2017 (2017-06-08) paragraphs [0014]-[0072], fig. 1-18 | 1-13 |
| A | JP 2003-015704 A (AIE RESEARCH INC) 17 January 2003 (2003-01-17) paragraphs [0064]-[0550], fig. 1-84 | 1-13 |
| P, A | WO 2022/004306 A1 (IHI CORP) 06 January 2022 (2022-01-06) paragraphs [0013]-[0110], fig. 1-11 | 1-13 |

☑ Further documents are listed in the continuation of Box C.        ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 September 2022** | **04 October 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

**INTERNATIONAL SEARCH REPORT**

International application No.

**PCT/JP2022/032263**

**C.** **DOCUMENTS CONSIDERED TO BE RELEVANT**

| Category* | Citation of document, with indication, where appropriate, of the relevant passages | Relevant to claim No. |
|---|---|---|
| P, A | JP 2021-196634 A (HITACHI LTD) 27 December 2021 (2021-12-27) paragraphs [0010]-[0140], fig. 1-42 | 1-13 |

Form PCT/ISA/210 (second sheet) (January 2015)

<div align="center">

**INTERNATIONAL SEARCH REPORT**
Information on patent family members

</div>

| | International application No. |
|---|---|
| | **PCT/JP2022/032263** |

| Patent document cited in search report | | | Publication date (day/month/year) | Patent family member(s) | Publication date (day/month/year) |
|---|---|---|---|---|---|
| WO | 2021/149096 | A1 | 29 July 2021 | (Family: none) | |
| JP | 2019-105973 | A | 27 June 2019 | WO 2019/116683 A1 paragraphs [0016]-[0070], fig. 1-3 TW 201928559 A | |
| JP | 2018-143046 | A | 13 September 2018 | (Family: none) | |
| WO | 2017/094100 | A1 | 08 June 2017 | (Family: none) | |
| JP | 2003-015704 | A | 17 January 2003 | (Family: none) | |
| WO | 2022/004306 | A1 | 06 January 2022 | (Family: none) | |
| JP | 2021-196634 | A | 27 December 2021 | WO 2021/250941 A1 paragraphs [0011]-[0155], fig. 1-42 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016207017 A